# EUROPEAN PATENT APPLICATION

(11) **EP 3 975 385 A1**
(43) Date of publication of application: **30.03.2022**
(21) Application number: 19929711.0
(22) Date of filing: 21.05.2019
(51) Int. Cl.: H02K 1/14, H02K 1/04

(54) **SPLIT CORE ASSEMBLY AND STATOR COMPRISING SAME**

(71) Applicant: LG Magna e-Powertrain Co., Ltd., Seo-gu, Incheon 22744 (KR)
(72) Inventor: LEE, Ji Won, Incheon 22716 (KR); PARK, Ji Seong, Bucheon-si Gyeonggi-do 14588 (KR); OH, Jin Su, Incheon 22698 (KR); LEE, Hyoung Gun, Suwon-si Gyeonggi-do 16420 (KR)
(74) Representative: Vossius & Partner Patentanwälte Rechtsanwälte mbB
(86) International application number: PCT/KR2019/006099
(87) International publication number: WO 2020/235713

(57) **Abstract**

A split-core assembly and a stator including the split-core assembly are provided. A split-core assembly according to an embodiment of the present disclosure includes a split core, a bobbin, a coil, and a terminal holder. The terminal holder has an insulating protrusion, and when two split-core assemblies are coupled to each other, the insulating protrusion of any one terminal holder overlaps the other terminal holder. Accordingly, it is possible to prevent a gap between the split-core assemblies and it is possible to provide a stator in which a split core and a conductive plate are separated.

## Description

### [Technical Field]

The present disclosure relates to a split-core assembly and a state including the split-core assembly. The present disclosure, in more detail, relates to a split-core assembly that constitutes a concentrated type motor and includes a plurality of split cores, a coil coupled to each split core, and an insulator coupled between the split core and the coil, and a stator including the split-core assembly.

### [Background Art]

A brushless motor includes a stator and a rotor, and the stator includes a stator core on which a coil is wound. The stator core may be divided into a plurality of parts (composed of split cores) arranged in the circumferential direction of the stator having a ring shape, and an insulator is coupled between each of the split cores and a coil for insulation between the split core and the coil.

A motor may be classified into a concentrated type motor and a distributed type motor in accordance with the winding type, and a concentrated type motor may be used as the driving motor of a hybrid vehicle or an electric vehicle.

As a document related to the driving motor of vehicles, a 'concentrated type coil connecting structure of motor for hybrid vehicle' has been disclosed in Korean Patent No. 1080768 (hereafter, referred to as a 'prior art document 1'), which includes a conductive holder having accommodation grooves and a U-phase/V-phase/W-phase/N-phase conductive plates are inserted and fixed in the accommodation grooves of the conductive holder.

According to the prior art document 1, each conductive plate is bonded to the coil of a stator by welding, the conductive holder is made of a plastic material, so it has non-conductivity, and the conductive plates are accommodated in the conductive holder made of a copper material.

As another document related to the driving motor of vehicles, a 'terminal assembly for motor of hybrid vehicle' has been disclosed in Korean Patent No. 1163475 (hereafter, referred to as a 'prior art document 2'). The terminal assembly includes a holder, a terminal, and a clip.

In the prior art document 2, wiring is required between a wiring terminal of each terminal and a coil, the coils each may be made of a copper material and are classified into a U-phase terminal, a V-phase terminal, a W-phase terminal, and an N-phase terminal, and an insulation distance is maintained by the clip and the holder.

However, in the prior art document 2, several clips and holders are required to insulate the terminals, so the number of parts that should be assembly is large. Further, a specific assembly process such as bolting is required to fasten the conductive holder of the prior art document 1 and the terminal assembly of the prior art document 1 to the upper portion of the stator, so the manufacturing cost may be increased.

As another document related to the driving motor of vehicles, a 'bobbin of motor for vehicle' has been disclosed in Korean Patent Application Publication No. 20130012719 (hereafter, referred to as a 'prior art document 3'). The bobbin according to the prior art document 3 includes a body, a coupling groove, and a terminal holder and the terminal holder is integrated with the bobbin.

As described in the prior art document 3, when a terminal holder is integrated with a bobbin to manufacture a motor for a vehicle, the material cost can be reduced and the manufacturing process can be shortened. However, according to the bobbin of the prior art document 3, when a plurality of bobbins are circumferentially arranged to form a stator, a gap may be generated between the terminal holders. In this case, the insulation effect of the terminal holders may be decreased and the possibility of current leakage may be increased.

### [Disclosure of Invention]

### [Technical Problem]

An objective of the present disclosure is to provide a stator and a split-core assembly in which the portion between a split core and a conductive plate can be effectively and stably separated by an insulator (a nonconductor) when a stator or a split-core assembly in which an individual terminal holder is provided for each split core is formed.

Another objective of the present disclosure is to provide a stator and a split-core assembly in which terminals can effectively and stably overlap each other when a stator or a split-core assembly in which an individual terminal holder is provided for each split core is formed.

Another objective of the present disclosure is to provide a stator and a split-core assembly in which a wire between a coil and a conductive plate is not exposed over a bobbin and a terminal holder when a stator or a split-core assembly in which an individual terminal holder is provided for each split core is formed.

### [Technical Solution]

In order to achieve the objectives, a split-core assembly and a stator according to embodiments of the present disclosure have the following configuration.

The stator of an embodiment of the present disclosure is a stator of a concentrated type motor.

The stator includes a plurality of split-core assemblies. The plurality of split-core assemblies may be circumferentially arranged around a central axis of the stator in close contact with each other.

A split-core assembly according to an embodiment of the present disclosure may include a split core, a bobbin, a coil, and a terminal holder.

The split core is made of a conductor and forms the core of a stator.

The split core may have a yoke and a tooth extending from the yoke close to the central axis.

The bobbin may be made of an insulator and coupled to an outer surface of the tooth.

The coil is wound on the bobbin.

The terminal holder is made of an insulator.

A plurality of insertion grooves may be sequentially formed at the terminal holder such that a plurality of conductive plates electrically connected to the coil are inserted therein, respectively.

The terminal holder may be at least partially disposed on the yoke when the direction of the central axis is an up-down direction, and may have a plurality of insertion grooves formed in a radial direction of the stator such that a plurality of conductive plates, which are electrically connected to the coil, are inserted downward therein.

The terminal holder may have an insulating protrusion protruding along a certain surface crossing the central axis.

In an embodiment of the present disclosure, when two terminal holders are coupled, the insulating protrusion of any one terminal holder may overlap the other terminal holder to separate the split core and the conductive plates.

In an embodiment of the present disclosure, the terminal holder may have a bottom plate, an insulating protrusion, and an insulating groove.

The bottom plate may form the innermost surface of the insertion groove.

The bottom plate may form the bottom of the insertion groove.

The insulating protrusion may protrude in a circumferential direction of the stator from an end of the bottom plate.

The insulating groove may be a concave groove or a stepped groove formed at an end of the bottom plate opposite to the insulating protrusion.

In an embodiment of the present disclosure, when two terminal holders are coupled, the insulating protrusion of any one terminal holder may be seated in the insulating groove of the other terminal holder.

The terminal holder may have a plurality of middle partition walls spaced apart from each other to form insertion grooves.

The insulating protrusion may protrude in the circumferential direction of the stator from an end of the bottom plate and at least one partition wall, thereby forming a ┘ or └ shape, and
The insulating groove may be a stepped groove formed at an end of the bottom plate and at least one partition wall opposite to the insulating protrusion and having a ┘ or └ shape to correspond to the insulating protrusion.

In an embodiment of the present disclosure, the insulating protrusion and the insulating groove may be formed at each of the insertion grooves.

The protruding degree of the insulating protrusion may be increased as it goes away from the central axis

The terminal holder may a middle partition wall, an outer partition wall, and an inner partition wall.

The middle partition wall may form boundaries of the plurality of insertion grooves and may be provided as a plurality of pieces.

The outer partition wall may be farther from an end of the coil than the middle partition walls and spaced apart from the middle partition walls.

The inner partition wall may be closer to an end of the coil than the middle partition walls and spaced apart from the middle partition walls.

In an embodiment of the present disclosure, three-phase terminal grooves that are grooves in which connection portions of a U-phase conductive plate, a V-phase conductive plate, and a W-phase conductive plate of the conductive plate are fitted, respectively, may be formed at the middle partition walls and the inner partition walls.

A neutral terminal groove that is a groove in which a connection portion of an N-phase conductive plate of the conductive plates is fitted may be formed at the inner partition wall.

The bobbin may have a winding portion, an outer flange, and an inner flange.

The winding portion may be configured such that the coil is wound thereon.

The outer flange may be formed such that a diameter thereof is increased at a position farther from the central axis than the winding portion, and may be integrated with the terminal holder.

The inner flange may be formed such that a diameter thereof is increased at a position closer to the central axis than the winding portion.

A first groove that is a groove in which an end of the coil that is coupled to the connection portion of the N-phase conductive plate of the conductive plates is inserted, and a second groove that is a groove in which an end of the coil that is coupled to the connection portions of the U-phase conductive plate, the V-phase conductive plate, and the W-phase conductive plate of the conductive plates is inserted may be formed at an upper portion of the outer flange.

In an embodiment of the present disclosure, when the inner partition wall, the middle partition walls, and the outer partition wall are formed in the radial direction of the stator, the upper end of the outer flange may be higher than the upper ends of the middle partition walls and the inner partition wall, and the gap between the outer flange and the inner partition wall is larger than the gap between the innermost middle partition wall and the inner partition wall.

The bobbin may include a first bobbin and a second bobbin.

The first bobbin may be coupled to the upper portion of the tooth.

The second bobbin may be coupled to the lower portion of the tooth and may surround the tooth by being coupled to the first bobbin.

The first bobbin may have a first winding portion, a first outer flange, and a first inner flange.

The first winding portion may be configured such that the coil is wound thereon.

The first outer flange may be formed such that a diameter thereof is increased at a position farther from the central axis than the first winding portion, and may be integrated with the terminal holder.

The first inner flange may be formed such that a diameter thereof is increased at a position closer to the central axis than the first winding portion.

In an embodiment of the present disclosure, a first groove in which an end of the coil that is coupled to the connection portion of the N--phase conductive plate of the conductive plates is inserted, and a second groove in which an end of the coil that is coupled to the connection portions of the U--phase conductive plate, the V-phase conductive plate, and the W-phase conductive plate of the conductive plates is inserted may be formed at an upper portion of the first outer flange.

### [Advantageous Effects]

According to an embodiment of the present disclosure, since the split-core assembly includes a split core, a bobbin, a coil, and a terminal holder and the terminal holder has an insulating protrusion that protrudes along a certain surface crossing the central axis of a stator, when two split-core assemblies are coupled to each other, the split core and the conductive plate can be effectively and stably separated.

Further, according to an embodiment of the present disclosure, since the terminal holder has a bottom plate, an insulating protrusion, and an insulating groove, and when two split-core assemblies are coupled to each other, the insulating protrusion of any one terminal holder is seated in the insulating groove of the other terminal holder, it is possible to effectively and stably overlap the terminal holders and separate the conductive plates.

Further, according to an embodiment of the present disclosure, a plurality of insulating protrusions are formed at one terminal holder and protrude from a bottom plate and each partition wall and the number and shape of insulating grooves correspond to those of the insulating protrusions, so insulation between the conductive plate, insulation between the conductive plates and the split core, and coupling of terminal holders can be stably made.

Further, according to an embodiment of the present disclosure, the protruding degree of the insulating protrusion is increased as it goes away from the central axis of the stator, it is possible to more effectively prevent a gap between two terminal holders.

Further, according to an embodiment of the present disclosure, since the coil and the conductive plates are connected in the space between the outer flange and the inner partition wall, it is possible to provide a stator and a split-core assembly in which the wires between the coil and the conductive plates are not exposed over the bobbin and the terminal holder.

### [Brief Description of Drawings]

FIG. 1 is a perspective view showing a stator according to an embodiment of the present disclosure.
FIG. 2 is a perspective view showing the split-core assembly shown in FIG. 1.
FIG. 3 is a perspective view separately showing a split core, a bobbin, and a terminal holder of the split-core assembly shown in FIG. 2.
FIG. 4 is an exploded perspective view showing the stator shown in FIG. 1 and conductive plates coupled to the stator.
FIG. 5 is a partial enlarged plan view showing the state in which a stator and conductive plates according to an embodiment of the present disclosure are coupled.
FIG. 6 is a perspective cross-sectional view taken along line A-A' of FIG. 5.
FIG. 7A is an enlarged perspective view showing a portion of the bobbin and the terminal holder shown in FIG. 3.
FIG. 7B is a perspective view showing the portion of the bobbin and the terminal holder shown in FIG. 7A in another direction.
FIG. 8 is a plan view showing the bobbin and the terminal holder shown in FIG. 3.
FIG. 9 is a plan view showing a bobbin and a terminal holder according to another embodiment of the present disclosure.

### ^{∗}Detailed Description of Main Elements

| | | |
|---|---|---|
| | 1 : stator | S : central axis |
| | 10 : split-core assembly | 100 : split core |
| | 110 : yoke | 111 : protrusion |
| | 112 : concave portion | 120 : tooth |
| | 200 : bobbin | 200a : first bobbin |
| | 200b : second bobbin | 210 : winding portion |
| | 210a : first winding portion | 210b : second winding portion |
| | 220 : outer flange | 220a : first outer flange |
| | 220b : second outer flange | 221 : first groove |
| | 222 : second groove | 230 : inner flange |
| | 230a : first inner flange | 230b : second inner flange |
| | 240 : first overlap portion | 250 : second overlap portion |
| | 300 : coil | 310 : first end |
| | 320 : second end | 20 : N-phase conductive plate |
| | 30 : U-phase conductive plate | 40 : V-phase conductive plate |
| | 50 : W-phase conductive plate | 400 : terminal holder |
| | 401, 402, 403, 404 : insertion groove | 411, 412, 413, 414 : insulating protrusion |
| | 430 : bottom plate | 421, 422, 423, 424 : insulating groove |
| | 441, 442, 443 : middle partition wall | 444 : outer partition wall |
| | 445 : inner partition wall | 441a, 442a, 443a, 445a : 3-phase terminal |
| groove | | |
| | 445b: neutral termianl groove | |

### [Mode for Carrying Out the Invention]

Hereafter, embodiments of the present disclosure are described in detail with reference to the accompanying drawings to describe the present disclosure in more detail. Like reference numerals indicate the same components throughout the detailed description.

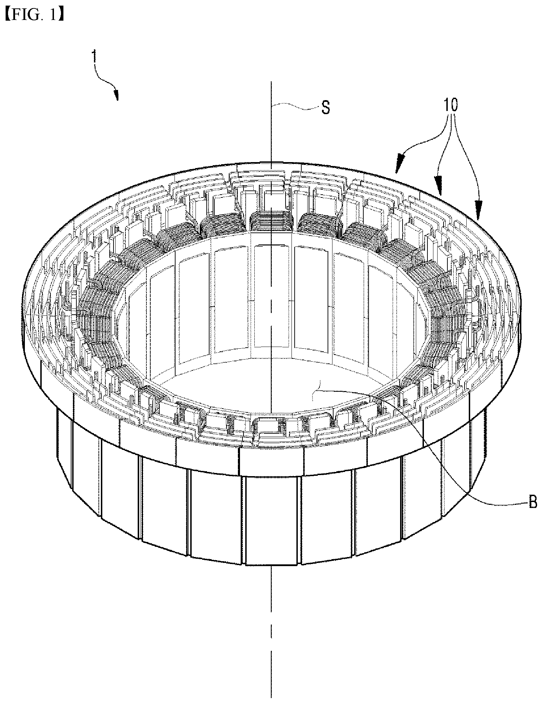

FIG. 1 is a perspective view showing a stator 1 according to an embodiment of the present disclosure.

Embodiments of the present disclosure relate to a concentrated type motor, a stator 1 constituting the concentrated type motor, and a split-core assembly 10 constituting the stator 1.

The split-core assembly 10 is provided as several parts and the split-core assemblies 10 are circumferentially arranged around a central axis S of the stator 1. That is, a plurality of split-core assemblies 10 is circumferentially arranged around the central axis S. The stator 1 shown in FIG. 1 can be formed by combining the plurality of split-core assemblies 10.

A motor including the stator 1 according to an embodiment of the present disclosure may be a 3-phase motor and the number of the split-core assemblies 10 forming one stator 1 may be a multiple of 3. For example, as shown in FIG. 1, the number of the split-core assemblies 10 constituting one stator 1 may be 24.

In the description of embodiments of the present disclosure, the direction that is parallel with the direction of the central axis S of the stator 1 is defined as an up-down direction. The 'circumferential direction' that is described in embodiments of the present disclosure is a circumferential direction around the central axis S and the 'radial direction' is the radial direction from the central axis S unless stated otherwise.

The plurality of split-core assemblies 10 are arranged such that both ends are in close contact with each other in the circumferential direction. The split-core assemblies 10 may be coupled to each other as they are, or may be coupled to each other through other parts. As for the former, for example, the split-core assemblies 10 maybe fitted or locked to each other, and as for the latter, for example, the split-core assemblies 10 may be inserted and coupled to each other in the housing of a motor.

The stator 1 to which the split-core assemblies 10 are coupled entirely may have a ring shape. When the stator 1 of the present disclosure constitutes a concentrated type motor, a rotor may be positioned in the central space B of the stator 1 and may be rotated about the central axis S.

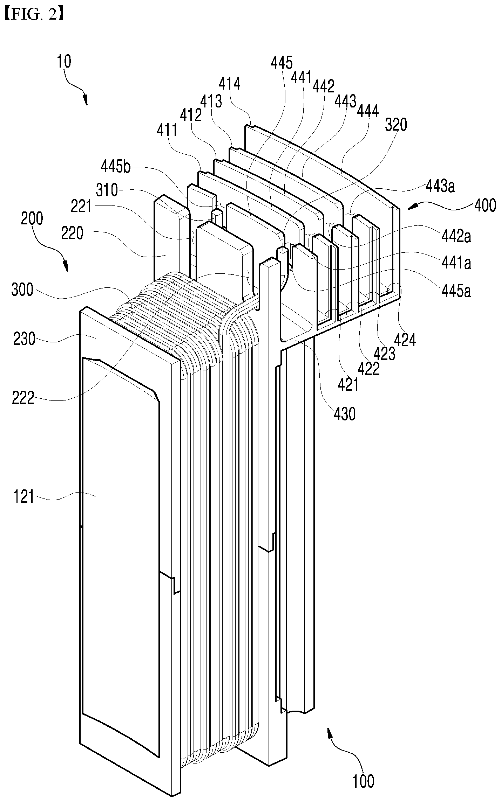

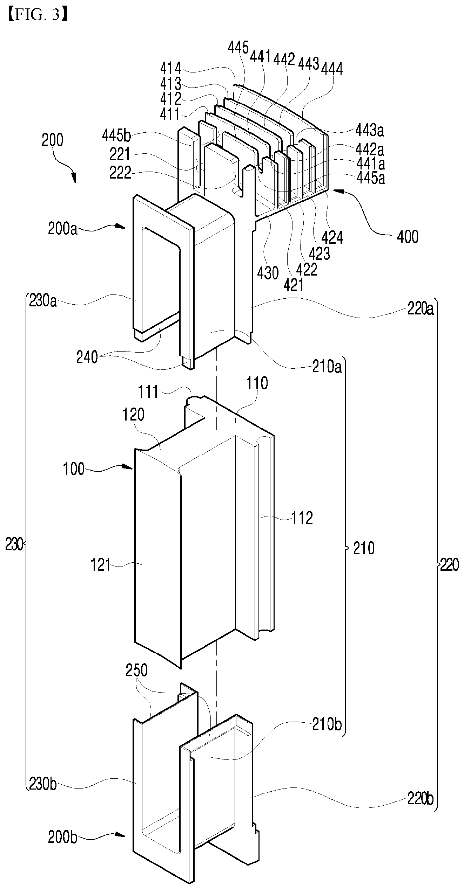

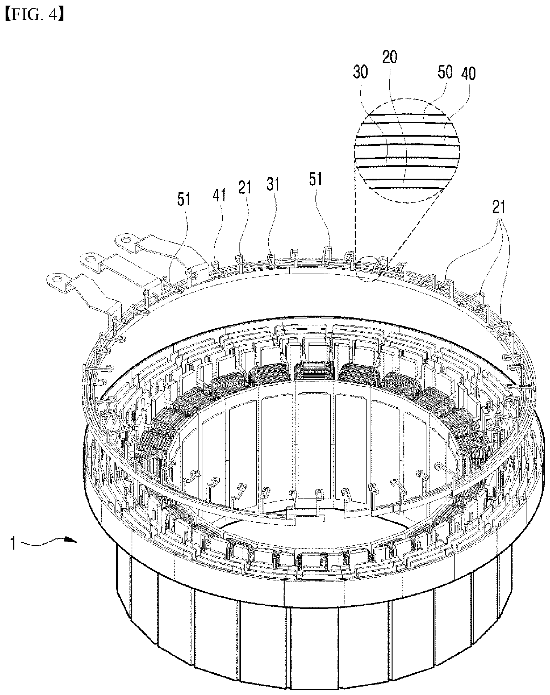

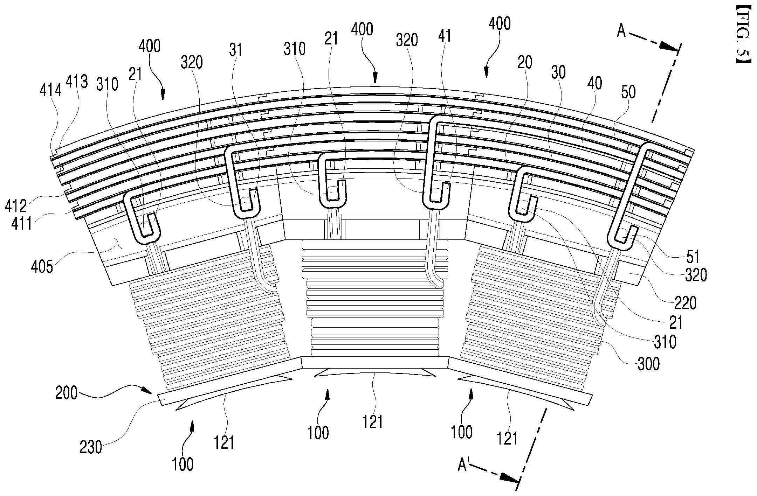

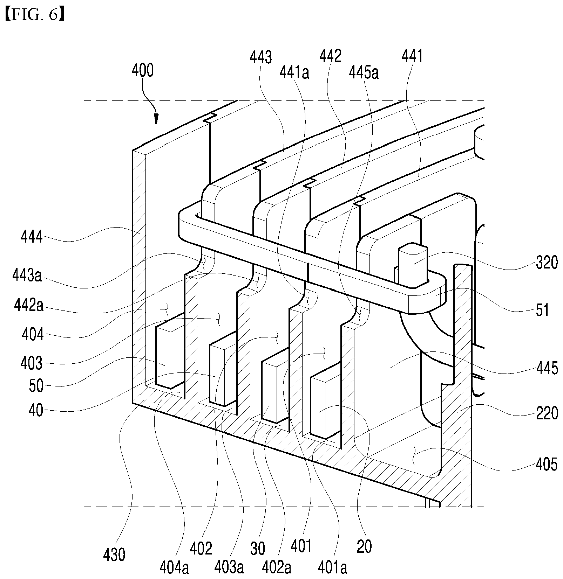

FIG. 2 is a perspective view showing the split-core assembly 10 shown in FIG. 1, FIG. 3 is a perspective view separately showing a split core 100, a bobbin 200, and a terminal holder 400 of the split-core assembly shown in FIG. 2, FIG. 4 is an exploded perspective view showing the stator 1 shown in FIG. 1 and conductive plates 20, 30, 40, and 50 coupled to the stator 1, FIG. 5 is a partial enlarged plan view showing the state in which the stator a and the conductive plates 20, 30, 40, and 50 according to an embodiment of the present disclosure are coupled, and FIG. 6 is a perspective cross-sectional view taken along line A-A' of FIG. 5.

The split-core assembly 10 may include a split core 100, a bobbin 200, a coil 300, and a terminal holder 400.

The split core 100 may be made of conductive metal. The split core 100 may be formed by stacking several metal plates (core plates) in the up-down direction, in which the metal plates may have the same shape and size.

The split core 100 may have a yoke 110 and a tooth 120 extending close to the central axis S from the yoke 110.

The yoke 110 is the portion that is relatively far from the central axis S and the tooth 120 is the portion that is relatively close to the central axis S. The yoke 110 has a circumferential with, as compared with the tooth 120.

The inner surface 121 of the tooth 120 may be a curved surface and faces the central axis S of the stator 1.

When split-core assemblies 10 are coupled to each other, any one split core 100 and the other split core 100 may be in close contact with each other, and in this case, the yokes 110 of the split cores 100 may be in close contact with each other.

In order to stably bring the split cores 100 in close contact with each other and in order to stably couple the split cores 100, a protrusion 111 that circumferentially protrudes may be formed on any one side of the yoke 110 and a concave groove 112 may be formed on the other side so that the protrusion 111 is inserted therein. The protrusion 111 and the groove 112 may be formed to be fitted to each other. That is, the protrusion 111 and the groove 112 may be formed on opposite sides in the circumferential direction and may have corresponding shapes and sizes (see FIG. 3).

The bobbin 200 may be made of an insulator and may be coupled to the outer side of the split core 110. The bobbin 200 may be made of plastic. The bobbin 200 may be formed to surround at least a portion of the tooth 120.

The bobbin 200 is provided for insulation between the split core 100 and a coil 300 when the coil 300 is wound around the split core 100. The bobbin 200 is positioned between the split core 100 and the coil 300 and surrounds the tooth 120 of the split core 100. The bobbin 200 may be formed in a tube shape, and in this case, the axis thereof may be defined in the radial direction of the stator 1.

In an embodiment of the present disclosure, the bobbin 200 may have a winding portion 210, an outer flange 220, and an inner flange 230.

The coil 300 may be wound on the outer surface of the winding portion 210.

The winding portion 210 may be formed in a tube shape, and in this case, the axis of the winding portion 210 may face the radial direction of the stator 1, and the cross-section of the winding portion 210 may be a rectangle.

The outer flange 220 may be integrated with the winding portion 210 and is formed such that the diameter increases at a position that is farther from the central axis S than the winding portion 210. That is, the outer flange 220 is formed such that the edge opens outward at the winding portion 210. The outer flange 220 may form the outer end of the bobbin 200 in the radial direction of the stator 1. The outer flange 220 may form the boundary of the region in which the coil 300 is wound when the coil 300 is wound on the winding portion 210.

In the split-core assemblies 10 and the stator 1 according to an embodiment of the present disclosure, the outer flange 200 may be integrated with the terminal holder 400. That is, the terminal holder 400 may be integrated with the bobbin 200.

The inner flange 230 may be integrated with the winding portion 210 and is formed such that the diameter increases at a position that is closer to the central axis S than the winding portion 210. That is, the inner flange 230 is formed such that the edge opens outward at the winding portion 210. The inner flange 230 may form an end of the bobbin 200 at the opposite side to the outer flange 220. That is, the inner flange 230 may form the inner end of the bobbin 200 in the radial direction of the stator 1. The inner flange 230 may form the boundary of the region in which the coil 300 is wound when the coil 300 is wound on the winding portion 210.

A first groove 221 and a second groove 222 may be formed at the upper portion of the outer flange 220.

The first groove 221 is formed to be concave downward from the upper end of the outer flange 220 and the outer flange 220 is radially pierced by the first groove 221. An end 310 of the coil 300 to which A connection portion 21 of an N-phase conductive plate 20 of the conductive plates is coupled is inserted in the first groove 221.

The second groove 222 is spaced apart from the first groove 221 and is formed to be concave downward from the upper end of the outer flange 220, and the outer flange 220 is pierced by the second groove 222. An end 320 of the coil 300 that is coupled to one of a connection portion 31 of a U-phase conductive plate 30, a connection portion 42 of a V-phase conductive plate 40, and a connection portion 51 of a W-phase conductive plate 50 is inserted in the second groove 222.

In an embodiment of the present disclosure, the bobbin 200 may include a first bobbin 200a and a second bobbin 200b.

The first bobbin 200a is a part coupled to the upper portion of the tooth 120 and the second bobbin 200b is a part coupled to the lower portion of the tooth 120. The second bobbin 200b is coupled to the first bobbin 200a, thereby surrounding the tooth 120.

The first bobbin 200a has a first winding portion 210a, a first flange 220a, and a first inner flange 230a.

The first winding portion 210a, which is the portion on which the coil 300 is wound, forms the upper portion of the winding portion 210.

The first outer flange 220a is formed such that the diameter increases at a position farther from the central axis S than the first winding portion 210a, and forms the upper portion of the outer flange 220.

In an embodiment of the present disclosure, when the bobbin 200 is divided into the first bobbin 200a and the second bobbin 200b, the first groove 221 and the second groove 220 may be formed at the first outer flange 220a.

The first inner flange 230a is formed such that the diameter increases at a position closer to the central axis S than the first winding portion 210a, and forms the upper portion of the inner flange 230.

The second bobbin 200b may have a second winding portion 210b, a second outer flange 220b, and a second inner flange 230b.

The second winding portion 210b, which is the portion on which the coil 300 is wound, forms the lower portion of the winding portion 210.

The second outer flange 220a is formed such that the diameter increases at a position farther from the central axis S than the second winding portion 210b, and forms the lower portion of the outer flange 220.

The second inner flange 230b is formed such that the diameter increases at a position closer to the central axis S than the second winding portion 210b, and forms the lower portion of the inner flange 230.

The lower portion of the first bobbin 200a and the upper portion of the second bobbin 200b may be formed such that any one thereof is fitted in the other one. That is, the lower portion 200a and the upper portion of the second bobbin 200b may overlap each other. The portion of the first bobbin 200a that overlaps the second bobbin 200b is a first overlap portion 240, and the portion of the second bobbin 200b that overlaps the first bobbin 200a is a second overlap portion 250. The first overlap portion 240 may be formed at the lower ends of the first winding portion 210a, the first outer flange 220a, and the first inner flange 230a, and the second overlap portion 250 may be formed at the upper ends of the second winding portion 210b, the second outer flange 220b, and the second inner flange 230b.

Accordingly, when the first bobbin 200a and the second bobbin 200b are coupled, relative movement in the circumferential direction and the radial direction between the first bobbin 200a and the second bobbin 200b is prevented, whereby they can be stably coupled.

The coil 300 is made of conductive metal and may be made of copper, and is repeatedly wound on the outer surface of the winding portion 210 of the bobbin 200. A first end 310 that is any one end of the coil 300 is fitted in the first groove 221 of the outer flange 220 and positioned toward the terminal holder 400. Further, a second end 320 that is the other end of the coil 300 is fitted in the second groove 222 of the outer flange 220 and positioned toward the terminal holder 400.

The terminal holder 400 may be an insulator in an embodiment of the present disclosure.

The terminal holder 400 may be integrated with the bobbin 200. When the bobbin 200 is divided into the first bobbin 200a and the second bobbin 200b, the terminal holder 400 may be integrated with the first bobbin 200a.

The terminal holder 400 may be at least partially disposed on the yoke 110 in an embodiment of the present disclosure.

A plurality of insertion grooves 401, 402, 403, and 404 in which the plurality of conductive plates 20, 30, 40, and 50 electrically connected to the coil 300 are inserted, respectively, may be sequentially formed at the terminal holder 400.

A motor including the split-core assemblies 10 and the stator 1 according to an embodiment of the present disclosure may be a 3-phase motor, and in this case, the conductive plates 20, 30, 40, and 50 and the coil 300 may be connected to make Y-wiring.

The conductive plates 20, 30, 40, and 50 coupled to the stator 1 may be four conductive plates. The N-phase conductive plate 20 that forms a neutral point, and the U-phase conductive plate 30, V-phase conductive plate 40, and W-phase conductive plate 50 that form 3 phases each may be connected to the terminal holder 400. The four conductive plates 20, 30, 40, and 50 may be coaxially arranged (around the central axis S).

Four insertion grooves 401, 402, 403, and 404 may be formed at the terminal holder 400 such that the four conductive plates 20, 30, 40, and 50 are inserted therein, respectively. The insertion grooves 401, 402, 403, and 404 are narrow and long grooves and are elongated in the circumferential direction of the stator 1.

The terminal holder 400 has a plurality of partition walls 441, 442, 443, 444, and 445 spaced apart from each other to form the insertion grooves 401, 402, 403, and 404.

In an embodiment of the present disclosure, the partition walls 441, 442, 443, 444, and 445 may be radially spaced apart from each other. That is, the partition walls 441, 442, 443, 444, and 445 may be spaced apart from each other in a direction perpendicular to the central axis S. In another embodiment of the present disclosure, the partition walls may be spaced apart from each other in a direction not perpendicular to the central axis S or may be spaced apart from each other in a direction inclined a predetermined angle from the central axis S.

It is assumed in the following description that the partition walls 441, 442, 443, 444, and 445 are spaced apart from each other in a radial direction of the central axis S.

The terminal holder 400 has a bottom plate 430 and a plurality of partition walls 441, 442, 443, 444, and 445 such that the insertion grooves 401, 402, 403, and 404 can be formed.

The bottom plate 430 connects the lower ends of the plurality of partition walls 441, 442, 443, 444, and 445 to each other. The bottom plate 430 may form the innermost surfaces of the insertion grooves 401, 402, 403, and 404, and the top of the bottom plate 430 may be the bottoms 401a, 402a, 403a, and 404a of the insertion grooves 401, 402, 403, and 404.

The bottom plate 430 may form a portion of a fan shape in a plane. That is, the bottom plate 430 may be formed such that the circumferential width increases as it goes away from the central axis S, and both edges of the bottom plate 430 may be arranged in the radial direction of the stator 1.

The terminal holder 400 has five partition walls 441, 442, 443, 444, and 445 to form the four insertion grooves 401, 402, 403, and 404.

The four insertion grooves 401, 402, 403, and 404 can be formed in the radial direction of the stator 1, can form a portion of a coaxial circle, and can be spaced apart from each other with the same intervals by the partition walls 441, 442, 443, 444, and 445.

The insertion grooves 401, 402, 403, and 404 of the terminal hole 400 are open upward, and the conductive plates 20, 30, 40, and 50 are inserted downward in the insertion grooves 401, 402, 403, and 404.

The up-down heights of the partition walls 441, 442, 443, 444, and 445 (the up-down heights of the insertion grooves 401, 402, 403, and 404) are larger than the up-down heights of the conductive plates 20, 30, 40, and 50.

The partition walls 441, 442, 443, 444, and 445 may be formed such that the widths (circumferential lengths) thereof are sequentially increased as they go away from the central axis S.

The partition walls 441, 442, 443, 444, and 445 may be formed circumferentially throughout the entire region of the bottom plate 430. That is, the circumferential lengths of the partition walls 441, 442, 443, 444, and 445 may be the same as the circumferential length of the bottom plate 430 at the positions where the partition walls 441, 442, 443, 444, and 445 are connected.

The partition walls may be classified into middle partition walls 441, 442, and 443, an outer partition wall 444, and an inner partition wall 445. That is, the terminal holder 400 may have middle partition walls 441, 442, and 443, an outer partition wall 444, and an inner partition wall 445.

The middle partition walls 441, 442, and 443 form the boundaries of the plurality of insertion grooves 401, 402, 403, and 404, and may be provided as a plurality of pieces. When four insertion grooves 401, 402, 403, and 404 are provided, three middle partition walls 441, 442, and 443 are provided. The middle partition walls 441, 442, and 443 may all have the same height.

The outer partition wall 444 may be farther from the ends 310 and 320 of the coil 300 than the middle partition walls 441, 442, and 443, and may be spaced apart from the middle partition walls 441, 442, and 443.

The outer partition wall 444 may be positioned outside the middle partition wall 443 (far from the central axis S) which is farthest from the central axis S in the radial direction. The height of the outer partition wall 444 may be larger than the height of the middle partition walls 441, 442, and 443.

The inner partition wall 445 may be closer to the ends 310 and 320 of the coil 300 than the middle partition walls 441, 442, and 443, and may be spaced apart from the middle partition walls 441, 442, and 443.

The inner partition wall 445 may be positioned inside the middle partition wall 441 (close to the central axis S) which is closest to the central axis S in the radial direction. The height of the inner partition wall 445 may be the same as the height of the middle partition walls 441, 442, and 443.

In an embodiment of the present disclosure, 3-phase terminal grooves 441a, 442a, 443a, and 445a may be formed at the middle partition walls 441, 442, and 443 and the inner partition wall 445. The 3-phase terminal grooves 441a, 442a, 443a, and 445a may be formed downward from the upper ends of the middle partition walls 441, 442, and 443 and the inner partition wall 445. The upper portions of the middle partition walls 441, 442, and 443 and the inner partition wall 445 are radially pierced by the 3-phase terminal grooves 441a, 442a, 443a, and 445a.

The length (height) from the lower ends of the 3-phase terminal grooves 441a, 442a, 443a, and 445a to the top (the bottoms 401a, 402a, 403a, and 404a) of the bottom plate 430 may be larger than or the same as the up-down length (height) of the 3-phase terminal grooves 441a, 442a, 443a, and 445a.

The 3-phase terminal grooves 441a, 442a, 443a, and 445a may be arranged straight at the terminal holder 400.

The connection portion 31 of the U-phase conductive plate 30, the connection portion 41 of the V-phase conductive plate 40, and the connection portion 51 of the W-phase conductive plate 50 are individually fitted in the -phase terminal grooves 441a, 442a, 443a, and 445a, respectively.

A neutral terminal groove 445b may be formed at the inner partition wall 445 in an embodiment of the present disclosure. The neutral terminal groove 445b is formed downward from the upper end of the inner partition wall 445. The upper portion of the inner partition wall 445 is radially pierced by the neutral terminal groove 445b.

The length (height) from the lower end of the neutral terminal groove 445b to the top (the bottoms 401a, 402a, 403a, and 404a) of the bottom plate 430 may be larger than or the same as the up-down length (height) of the neutral terminal groove 445b.

The connection portion 21 of the N-phase conductive plate 20 is fitted in the neutral terminal groove 445b.

In an embodiment of the present disclosure, when the inner partition wall 445, the middle partition walls 441, 442, and 443, and the outer partition wall 444 are formed in the radial direction of the stator 1, the upper end of the outer flange 220 may be higher than the upper ends of the middle partition walls 441, 442, and 443 and the inner partition wall 445, and the gap between the outer flange 220 and the inner partition wall 445 may be larger than the gaps between the partition walls 441, 442, 443, 444, and 445.

In an embodiment of the present disclosure, the ends 310 and 320 of the coil 300 and the connection portions 21, 31, 42, and 51 of the conductive plates 20, 30, 40, and 50 may be easily coupled in a space 405 between the outer flange 220 and the inner partition wall 445. In this case, the ends 310 and 320 of the coil 300 and the connection portions 21, 31, 42, and 51 of the conductive plates 20, 30, 40, and 50 may be coupled without being exposed over the upper ends of the bobbin 200 and the terminal holder 500.

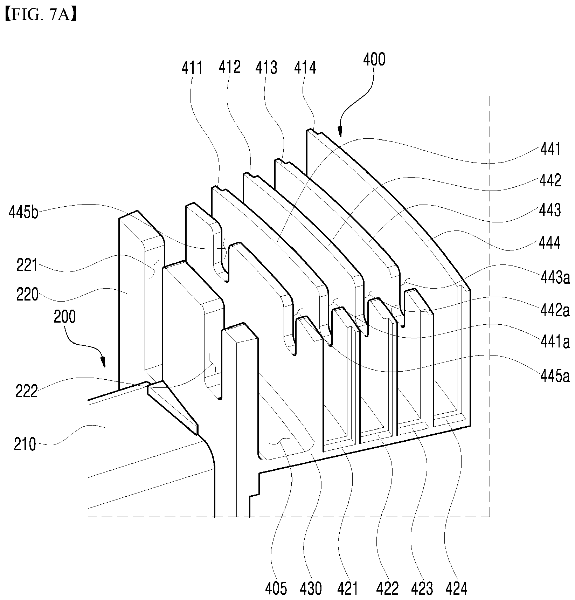

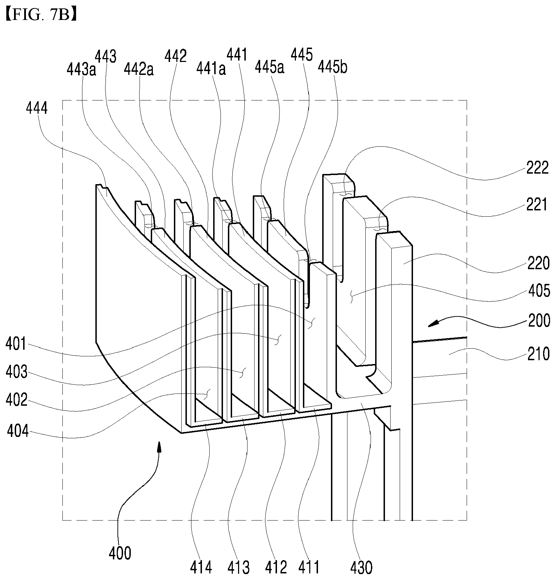

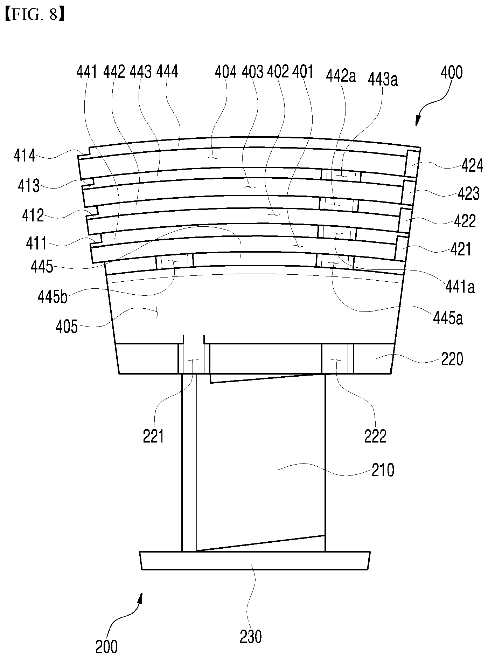

FIG. 7A is an enlarged perspective view showing a portion of the bobbin 200 and the terminal holder 400 shown in FIG. 3, FIG. 7B is a perspective view showing the portion of the bobbin 200 and the terminal holder 400 shown in FIG. 7A in another direction, and FIG. 8 is a plan view showing the bobbin 200 and the terminal holder 400 shown in FIG. 3.

In an embodiment of the present disclosure, insulating protrusions 411, 412, 413, and 414 may be integrally formed at the terminal holder 400. In an embodiment of the present disclosure, insulating grooves 421, 422, 423, and 424 may be formed at the terminal holder 400.

The insulating protrusions 411, 412, 413, and 414 may protrude toward a certain surface crossing the central axis S, at the terminal holder 400.

The insulating protrusions 411, 412, 413, and 414 may protrude in the circumferential direction of the terminal holder 400.

Accordingly, in an embodiment of the present disclosure, when two terminal holders 400 are coupled to each other, the insulating protrusions 411, 412, 413, and 414 of any one terminal holder 400 may overlap the other terminal holder 400, and the split core 100 and the conductive plates 20, 30, 40, and 50 may be separated.

The insulating protrusions 411, 412, 413, and 414 may protrude in the circumferential direction of the stator 1 from an end of the bottom plate 430. The insulating protrusions 411, 412, 413, and 414 may protrude in the circumferential direction of the stator 1 from an end of any one or more of the partition walls 441, 442, 443, 444, and 445. Since the insulating protrusions 411, 412, 413, and 414 protrude from the bottom plate 430 and any one of the partition walls 441, 442, 443, 444, and 445, the insulating protrusions 411, 412, 413, and 414 may make a ┘ or └ shape. That is, the cross-section of the insulating protrusions 411, 412, 413, and 414 may be a ┘ or └ shape.

The insulating protrusions 411, 412, 413, and 414 may be formed at the insertion grooves 401, 402, 403, and 404, respectively. In this case, the insulating protrusions 411, 412, 413, and 414 may be formed radially throughout the insertion grooves 401, 402, 403, and 404 and may be formed throughout the insertion grooves 401, 402, 403, and 404 in the up-down direction.

Since the insulating protrusions 411, 412, 413, and 414 are formed at the insertion grooves 401, 402, 403, and 404, respectively, when four insertion grooves 401, 402, 403, and 404 are provided, four insulating protrusions 411, 412, 413, and 414 can be provided. When a plurality of insulating protrusions 411, 412, 413, and 414 are provided at one terminal holder 400, the insulating protrusions 411, 412, 413, and 414 may be formed in the same shape.

The thickness of the insulating protrusions 411, 412, 413, and 414 may be smaller than the thicknesses of the bottom plate 430 and the partition walls 441, 442, 443, 444, and 445. For example, the thickness of the insulating protrusions 411, 412, 413, and 414 may be about 1/2 of the thicknesses of the bottom plate 430 and the partition walls.

The insulating grooves 421, 422, 423, and 424 are formed opposite the insulating protrusions 411, 412, 413, and 414 at the terminal holder 400. That is, at the terminal holder 400, the insulating grooves 421, 422, 423, and 424 and the insulating protrusions 411, 412, 413, and 414 are formed at both circumferential ends.

The insulating grooves 421, 422, 423, and 424 may be concave grooves or stepped grooves formed at an end of the bottom plate 430.

In an embodiment of the present disclosure, when two terminal holders 400 are coupled to each other, the insulating protrusions 411, 412, 413, and 414 of any one terminal holder 400 may be seated in the insulating grooves 421, 422, 423, and 424 of the other terminal holder 400.

The insulating grooves 421, 422, 423, and 424 may be formed to be concave and may be stepped in the circumferential direction of the stator 1 at a circumferential end of the partition walls. Since the insulating grooves 421, 422, 423, and 424 are formed at the bottom plate 430 and any one of the partition walls 441, 442, 443, 444, and 445, the insulating grooves 421, 422, 423, and 424 may make a ┘ or └ shape. The insulating grooves 421, 422, 423, and 424 may have a shape and a size that correspond to those of the insulating protrusions 411, 412, 413, and 414.

The insulating grooves 421, 422, 423, and 424may be formed at the insertion grooves 401, 402, 403, and 404, respectively. In this case, the insulating grooves 421, 422, 423, and 424may be formed radially throughout the insertion grooves 401, 402, 403, and 404 and may be formed throughout the insertion grooves 401, 402, 403, and 404 in the up-down direction.

Since the insulating grooves 421, 422, 423, and 424 are formed at the insertion grooves 401, 402, 403, and 404, respectively, when four insertion grooves 401, 402, 403, and 404 are provided, four insulating grooves 421, 422, 423, and 424 are provided. When a plurality of insulating grooves 421, 422, 423, and 424are provided at one terminal holder 400, the insulating grooves 421, 422, 423, and 424may be formed in the same shape.

As described above, according to an embodiment of the present disclosure, the terminal holder 400 has the bottom plate 430, the insulating protrusions 411, 412, 413, and 414, and the insulating grooves 421, 422, 423, and 424. Further, when two split-core assemblies 20 are coupled to each other, the insulating protrusions 411, 412, 413, and 414 of any one terminal holder 500 are inserted or seated in the insulating grooves 421, 422, 423, and 424 of the other terminal holder 400. Accordingly, it is possible to effectively and stably overlap the terminal holders 400 and separate the conductive plates 20, 30, 40, and 50.

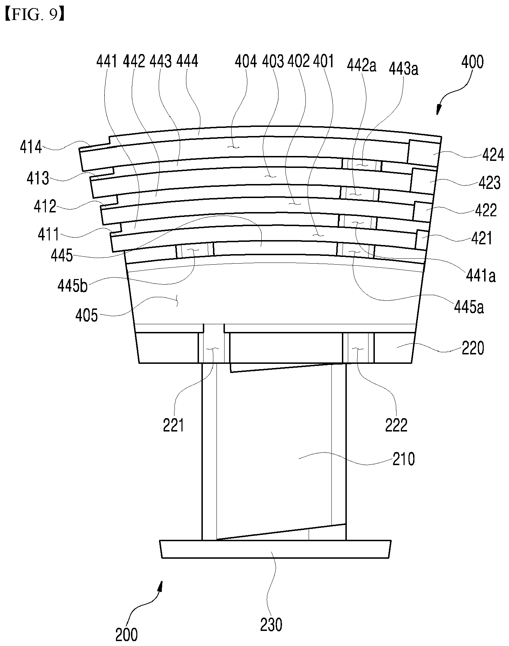

FIG. 9 is a plan view showing a bobbin 200 and a terminal holder 400 according to another embodiment of the present disclosure.

In an embodiment of the present disclosure, the protruding degrees of the insulating protrusions 411, 412, 413, and 414 may be increased as they go away from the central axis S.

When a plurality of insulating protrusions 411, 412, 413, and 414 are formed at one terminal holder 400, the insulating protrusions 411, 412, 413, and 414 that are relatively far from the central axis S may further protrude than the insulating protrusions 411, 412, 413, and 414 that are relatively close to the central axis S.

In this case, the insulating grooves 421, 422, 423, and 424 may also formed to corresponding to the protruding degrees of the insulating protrusions 411, 412, 413, and 414, respectively.

When a plurality of split-core assemblies 10 are circumferentially coupled to each other, the gap between the terminal holders 400 may be increased as it goes away from the central axis S. In this case, in an embodiment, the protruding degrees of the insulating protrusions 411, 412, 413, and 414 are increased as they go away from the central axis S, whereby it is possible to effectively prevent a gap between the terminal holders 400.

Although a specific embodiment of the present disclosure was described above with reference to drawings, the present disclosure is not limited thereto and it should be understood that the present disclosure may be changed and modified by those skilled in the art in various ways through more detailed embodiments without departing from the spirit and scope of the present disclosure. Accordingly, the range of the present disclosure should be defined not by the embodiment described above, but by the spirit described in claims.

### [industrial Availability]

In the split-core assembly and a stator including the split-core assembly according to an embodiment of the present disclosure, insulating protrusions are formed at a terminal holder, and when two split-core assemblies are coupled to each other, the insulating protrusions of any one terminal holder overlap the other terminal holder. Accordingly, it is possible to prevent a gap between the split-core assemblies, and the present disclosure has sufficient industrial applicability because the split core and the conductive plates are separated.

## Claims

1. A split-core assembly that is provided as a plurality of pieces arranged circumferentially around a central axis to constitute a stator of a concentrated type motor, the split-core assembly comprising:
a split core having a yoke and a tooth extending from the yoke close to the central axis;
a bobbin made of an insulator and coupled to an outer surface of the tooth;
a coil wound on the bobbin; and
a terminal holder made of an insulator, at least partially disposed on the yoke when the direction of the central axis is an up-down direction, and having a plurality of insertion grooves formed in a radial direction of the stator such that a plurality of conductive plates, which are electrically connected to the coil, are inserted downward therein,
wherein the terminal holder comprises an insulating protrusion protruding along a certain surface crossing the central axis, and
when two terminal holders are coupled, the insulating protrusion of any one terminal holder overlaps the other terminal holder to separate the split core and the conductive plates.

2. A split-core assembly that is provided as a plurality of pieces arranged circumferentially around a central axis to constitute a stator of a concentrated type motor, the split-core assembly comprising:
a split core having a yoke and a tooth extending from the yoke close to the central axis;
a bobbin made of an insulator and coupled to an outer surface of the tooth;
a coil wound on the bobbin; and
a terminal holder made of an insulator, at least partially disposed on the yoke when the direction of the central axis is an up-down direction, and having a plurality of insertion grooves formed in a radial direction of the stator such that a plurality of conductive plates, which are electrically connected to the coil, are inserted downward therein,
wherein the terminal holder comprises:
a bottom plate forming bottoms of the insertion grooves;
an insulating protrusion protruding in a circumferential direction of the stator from an end of the bottom plate; and
an insulating groove being a concave groove or a stepped groove formed at an end of the bottom plate opposite to the insulating protrusion, and
when two terminal holders are coupled to each other, the insulating protrusion of any one terminal holder is seated in the insulating groove of the other terminal holder.

3. A split-core assembly that is provided as a plurality of pieces arranged circumferentially around a central axis to constitute a stator of a concentrated type motor, the split-core assembly comprising:
a split core;
a coil wound around the split core;
a bobbin made of an insulator and positioned between the split core and the coil; and
a terminal holder made of an insulator and having a plurality of insertion grooves sequentially formed such that a plurality of conductive plates electrically connected to the coil are inserted therein, respectively,
wherein the terminal holder comprises:
a bottom plate forming innermost surfaces of the insertion grooves;
an insulating protrusion protruding in a circumferential direction of the stator from an end of the bottom plate; and
an insulating groove being a concave groove or a stepped groove formed at an end of the bottom plate opposite to the insulating protrusion, and
when two terminal holders are coupled to each other, the insulating protrusion of any one terminal holder is seated in the insulating groove of the other terminal holder.

4. The split-core assembly of claim 2, wherein:
the terminal holder comprises a plurality of partition walls spaced apart from each other to form the insertion grooves,
the insulating protrusion protrudes in the circumferential direction of the stator from an end of the bottom plate and at least one partition wall, thereby forming a ┘ or └ shape, and
the insulating groove is a stepped groove formed at an end of the bottom plate and at least one partition wall opposite to the insulating protrusion and having a ┘ or └ shape to correspond to the insulating protrusion.

5. The split-core assembly of any one of claims 1 to 4, wherein the insulating protrusion and the insulating groove are formed at each of the insertion grooves.

6. The split-core assembly of claim 5, whereina protruding degree of the insulating protrusion is increased as it goes away from the central axis.

7. The split-core assembly of any one of claims 1 to 4, wherein the terminal holder comprises:
a plurality of middle partition walls forming boundaries of the plurality of insertion grooves;
an outer partition wall being farther from an end of the coil than the middle partition walls and spaced apart from the middle partition walls; and
an inner partition wall being closer the end of the coil than the middle partition walls and spaced apart from the middle partition walls,
wherein three-phase terminal grooves that are grooves in which connection portions of a U-phase conductive plate, a V-phase conductive plate, and a W-phase conductive plate of the conductive plate are fitted, respectively, are formed at the middle partition walls and the inner partition walls, and
a neutral terminal groove that is a groove in which a connection portion of an N-phase conductive plate of the conductive plates is fitted is formed at the inner partition wall.

8. The split-core assembly of claim 7, whereinthe bobbin comprises:
a winding portion on which the coil is wound;
an outer flange formed such that a diameter thereof is increased at a position farther from the central axis than the winding portion, and integrated with the terminal holder; and
an inner flange formed such that a diameter thereof is increased at a position closer to the central axis than the winding portion, and
a first groove that is a groove in which an end of the coil that is coupled to the connection portion of the N-phase conductive plate of the conductive plates is inserted, and a second groove that is a groove in which an end of the coil that is coupled to the connection portions of the U-phase conductive plate, the V-phase conductive plate, and the W-phase conductive plate of the conductive plates is inserted are formed at an upper portion of the outer flange.

9. The split-core assembly of claim 8, wherein when the inner partition wall, the middle partition walls, and the outer partition wall are formed in the radial direction of the stator,
the upper end of the outer flange is higher than the upper ends of the middle partition walls and the inner partition wall, and
the gap between the outer flange and the inner partition wall is larger than the gap between the innermost middle partition wall and the inner partition wall.

10. The split-core assembly of any one of claims 1 to 4, wherein the bobbin comprises:
a first bobbin coupled to the upper portion of the tooth; and
a second bobbin coupled to the lower portion of the tooth and surrounding the tooth by being coupled to the first bobbin,
the first bobbin comprises:
a first winding portion on which the coil is wound;
a first outer flange formed such that a diameter thereof is increased at a position farther from the central axis than the first winding portion, and integrated with the terminal holder; and
a first inner flange formed such that a diameter thereof is increased at a position closer to the central axis than the first winding portion, and
a first groove in which an end of the coil that is coupled to the connection portion of the N-phase conductive plate of the conductive plates is inserted, and a second groove in which an end of the coil that is coupled to the connection portions of the U-phase conductive plate, the V-phase conductive plate, and the W-phase conductive plate of the conductive plates is inserted are formed at an upper portion of the first outer flange.

11. A stator comprising a plurality of the split-core assemblies of any one of claims 1 to 4, wherein the plurality of split-core assemblies are circumferentially coupled to each other.
